# EUROPEAN PATENT APPLICATION

(11) **EP 3 828 786 A1**
(43) Date of publication of application: **02.06.2021**
(21) Application number: 19212646.4
(22) Date of filing: 29.11.2019
(51) Int. Cl.: G06Q 10/00

(54) **A SYSTEM FOR VISUALIZING AN OBJECT TO A REMOTE USER FOR REMOTE ASSISTANCE APPLICATIONS**

(71) Applicant: Ladar Limited, George Hill (AI); G.M.S. Global Maritime Services Ltd., London W1W 7LT (GB)
(72) Inventor: PALUMBO, Gianluca, 00186 Rome RM (IT); DOKKEN, Sverre, 3071 Limassol (CY); GRINDEVOLL, Jorgen, Antioquia (CO); HJELMSTAD, Jens, 2000 Lillestrom (NO); MICHAEL, Alexis, 3111 Ayia Fyla, Limassol (CY)
(74) Representative: Patentship Patentanwaltsgesellschaft mbH

(57) **Abstract**

The invention relates to a system (100) for visualizing an object to a remote user. The system (100) comprises a digitization apparatus (101) comprising a sensor (101a), a processor (101b), and a communication interface (101c). The sensor (101a) is configured to sense the object within a three-dimensional space region to obtain sensor data. The processor (101b) is configured to determine volumetric data based upon the sensor data. The communication interface (101c) is configured to transmit the volumetric data. The system (100) further comprises a visualization apparatus (103) comprising a communication interface (103a), a processor (103b), and a display (103c). The communication interface (103a) is configured to receive the volumetric data. The processor (103b) is configured to determine a three-dimensional representation of the object based upon the volumetric data. The display (103c) is configured to visualize the three-dimensional representation of the object to the remote user. The system (100) is suited for remote assistance in maintenance, repair, and/or troubleshooting onboard a maritime vessel.

## Description

### TECHNICAL FIELD

The present invention relates to the technical field of remote assistance, in particular remote assistance in maintenance, repair, and/or troubleshooting onboard a maritime vessel.

### TECHNICAL BACKGROUND

Technical systems onboard a maritime vessel are nowadays highly complex technical systems, which turn out to be increasingly difficult to maintain, repair, and/or troubleshoot. As a matter of fact, for maintaining, repairing, and/or troubleshooting such technical systems onboard a maritime vessel, technical experts are usually required.

However, such technical experts are usually specifically trained for particular technical systems and are usually not present onboard such maritime vessels. This circumstance is of particular relevance in high risk or emergency situations on open seas, where immediate and professional assistance may be desirable.

The aforementioned challenges are furthermore of increasing relevance in the future, since maritime vessels are more and more envisioned to operate (partially) autonomously with a reduced or even no staff present onboard such maritime vessels.

### SUMMARY

It is an object of the invention to provide a system for visualizing an object to a remote user.

This object is achieved by the features of the independent claims. Further implementation forms are apparent from the dependent claims, the description and the figures.

The invention is based on the finding that recent advances in sensing technology, communication technology, and visualization technology may effectively be combined for providing assistance in maintenance, repair, and/or troubleshooting in real-time.

In more detail, an object being arranged within a three-dimensional space region may be sensed by a sensor capable of providing three-dimensional information associated with the object. Based upon the sensor data of the sensor, volumetric data may be determined and communicated over a communication network. For visualization of the object to a remote user at a remote location, a display as part of virtual reality (VR) glasses or headset, augmented reality (AR) glasses, a computer system, a smartphone, or a tablet may be employed.

For communicating the volumetric data, combinations of different communication standards, such as satellite-based communication standards and/or cellular mobile communication standards, may be employed, wherein communications at a small latency is desirable. The three-dimensional representation of the object, which is represented by the volumetric data, may be adapted to allow for the communication at the small latency. Thereby, operation of the system in real-time may be achieved.

According to a first aspect, the invention relates to a system for visualizing an object to a remote user. The system comprises a digitization apparatus comprising a sensor, a processor, and a communication interface. The sensor is configured to sense the object within a three-dimensional space region to obtain sensor data, the sensor data representing a location of the object relative to the sensor and a shape of the object relative to the sensor. The processor is configured to determine volumetric data based upon the sensor data, the volumetric data forming a three-dimensional volumetric representation of the object. The communication interface is configured to transmit the volumetric data over a communication network. The system further comprises a visualization apparatus comprising a communication interface, a processor, and a display. The communication interface is configured to receive the volumetric data over the communication network. The processor is configured to determine the three-dimensional representation of the object based upon the volumetric data. The display is configured to visualize the three-dimensional representation of the object to the remote user.

The object may be any physical object. For example, the object may be a component of a technical system onboard a maritime vessel. The remote user may be a technical expert and may specifically trained to maintenance, repair, and/or troubleshooting the object. The remote user may particularly be located at a location different from the location of the object.

In an embodiment, the digitization apparatus comprises a plurality of sensors comprising the sensor and a further sensor. The further sensor is configured to sense the object within the three-dimensional space region to obtain further sensor data, the further sensor data representing a further location of the object relative to the further sensor and a further shape of the object relative to the further sensor. The processor is configured to determine the volumetric data further based upon the further sensor data.

The further sensor provides additional three-dimensional information associated with the object. Therefore, the three-dimensional representation of the object may be improved.

In an embodiment, the digitization apparatus comprises a plurality of sensors comprising the sensor and a further sensor. The further sensor is configured to sense the object within the three-dimensional space region to obtain further sensor data, the further sensor data representing a texture and/or a color of the object. The processor is configured to determine the volumetric data further based upon the further sensor data.

The further sensor provides additional texture information and/or color information associated with the object. Therefore, the three-dimensional representation of the object may be enriched by texture information and/or color information.

In an embodiment, the processor of the digitization apparatus is configured to fuse the respective sensor data of the respective sensors of the plurality of sensors.

By fusion of the respective sensor data, a single three-dimensional representation of the object may be obtained. For example, a compensation of different spatial arrangements of the sensors around the object may be achieved. Furthermore, the quality of the three-dimensional representation of the object may be improved.

In an embodiment, the sensor and/or any one of the further sensors of the plurality of sensors of the digitization apparatus is one of the following sensors: a depth sensor, a radar sensor, a lidar sensor, a ladar sensor, an ultrasonic sensor, a stereographic camera, a visible light camera, an infrared light camera.

Three-dimensional information associated with the object may e.g. be provided by the following sensors: the depth sensor, the radar sensor, the lidar sensor, the ladar sensor, the ultrasonic sensor, and/or the stereographic camera. Texture information and/or color information associated with the object may e.g. be provided by the following sensors: the visible light camera, the infrared light camera; but also geometry can be derived algorithmically exploiting multiple couples of stereo images (stereo photogrammetry).

In an embodiment, the volumetric data comprises volumetric point cloud data, wherein the volumetric point cloud data represents a plurality of points on the surface of the object.

By using volumetric point cloud data, the object may be represented by the volumetric data in a particularly efficient manner.

In an embodiment, the communication interface of the digitization apparatus and the communication interface of the visualization apparatus are configured to establish a communication link for communicating the volumetric data. The processor of the digitization apparatus is configured to determine a latency of the communication link to obtain a latency indicator, and to adapt a quality of the three-dimensional volumetric representation of the object based upon the latency indicator.

By adapting the quality of the three-dimensional volumetric representation, the volumetric data may be adapted to allow for communication at small latency, e.g. 1 ms, 2 ms, 3 ms, 5 ms, 10 ms, 20 ms, 30 ms, 50 ms, 100 ms, 200 ms, 300 ms, 500 ms, or 1000 ms. Thereby, operation of the system in real-time may be achieved.

In an embodiment, the processor of the visualization apparatus is configured to perform a three-dimensional rendering based upon the volumetric data.

The three-dimensional rendering may e.g. be performed using a three-dimensional rendering application programming interface, API. Such three-dimensional rendering application programming interface, API, may specifically be designed for visualizing a specific type of object.

In an embodiment, the display is part of one of the following devices: virtual reality (VR) glasses or headset, augmented reality (AR) glasses, a computer system, a smartphone, a tablet.

By using virtual reality (VR) glasses or headset, the three-dimensional representation of the object may be visualized to the remote user within an entirely virtual space. By using augmented reality (AR) glasses, the three-dimensional representation of the object may be visualized to the remote user as an overlay to the physical world. By using the computer system, the smartphone or the tablet, the three-dimensional representation of the object may be visualized to the remote user on a specific user interface.

The three-dimensional representation of the object may be rotated, panned, and/or zoomed by the remote user. Thereby, an adaption of the viewing perspective may be realized.

In an embodiment, the digitization apparatus further comprises microphone(s) being configured to capture an acoustic sound signal, in particular an acoustic sound signal originating from the three-dimensional space region. The processor is configured to determine sound data based upon the acoustic sound signal. The communication interface is configured to transmit the sound data over the communication network. The visualization apparatus further comprises a loudspeaker. The communication interface is configured to receive the sound data over the communication network. The processor is configured to determine the acoustic sound signal based upon the sound data. The loudspeaker is configured to emit the acoustic sound signal towards the remote user.

By providing a microphone at the digitization apparatus and a loudspeaker at the visualization apparats, an audio connection from the digitization apparatus to the visualization apparatus may be realized. Thereby, the remote user may obtain further information, which may e.g. be provided by another user located at the object.

In an embodiment, the visualization apparatus further comprises microphone(s) being configured to capture a reverse acoustic sound signal, in particular a reverse acoustic sound signal originating from the remote user. The processor is configured to determine reverse sound data based upon the reverse acoustic sound signal. The communication interface is configured to transmit the reverse sound data over the communication network. The digitization apparatus further comprises a loudspeaker. The communication interface is configured to receive the reverse sound data over the communication network. The processor is configured to determine the reverse acoustic sound signal based upon the reverse sound data. The loudspeaker is configured to emit the reverse acoustic sound signal.

By providing a microphone at the visualization apparatus and a loudspeaker at the digitization apparatus, a reverse audio connection from the visualization apparatus to the digitization apparatus may be realized. Thereby, the remote user may provide spoken handling instructions for maintenance, repair, and/or troubleshooting, which may e.g. be executed by another user located at the object.

In an embodiment, the processor of the visualization apparatus is configured to determine an object type of the object based upon the three-dimensional representation of the object to obtain an object type indicator, and to retrieve object information associated with the object from a database based upon the object type indicator. The display of the visualization apparatus is configured visualize the object information to the remote user.

The visualization of the object information may be performed as an overlay to the three-dimensional representation of the object. The determination of the object type may be performed using three-dimensional pattern recognition schemes. The database may be a local database at the visualization apparatus or a remote database remote from the visualization apparatus. The objection information may e.g. represent blueprints, technical schemas, other graphical information associated with the object.

In an embodiment, the communication interface of the digitization apparatus and the communication interface of the visualization apparatus are configured to communicate over the communication network according to any one or a combination of the following communication standards: a satellite-based communication standard, in particular the Inmarsat BGAN communication standard, the Iridium Certus communication standard, and/or the Globalstar communication standard, a cellular mobile communication standard, in particular the 5G communication standard, the 4G communication standard, the 3G communication standard, and/or the WiMAX communication standard.

These communication standards may allow for an efficient communication between the communication interface of the digitization apparatus and the communication interface of the visualization apparatus, in particular from onboard a maritime vessel.

In an embodiment, the communication interface of the digitization apparatus is connectable to a communication relay, in particular a communication relay arranged onboard a maritime vessel. The communication relay is configured to relay the volumetric data between the communication interface of the digitization apparatus and the communication interface of the visualization apparatus.

The connection between the communication interface of the digitization apparatus and the communication relay may e.g. be realized by an Ethernet connection.

According to a second aspect, the invention relates to the use of the system for remote assistance in maintenance, repair, and/or troubleshooting onboard a maritime vessel.

The system may specifically be designed for the remote assistance in maintenance, repair, and/or troubleshooting onboard the maritime vessel. The system or parts of the system may be provided as a customized kit, e.g. in a suitcase, for easy deployment.

According to a third aspect, the invention relates to a method of operating a system for visualizing an object to a remote user. The system comprises a digitization apparatus and a visualization apparatus. The digitization apparatus comprises a sensor, a processor, and a communication interface. The visualization apparatus comprises a communication interface, a processor, and a display. The method comprises sensing, by the sensor of the digitization apparatus, the object within a three-dimensional space region to obtain sensor data, the sensor data representing a location of the object relative to the sensor and a shape of the object relative to the sensor, determining, by the processor of the digitization apparatus, volumetric data based upon the sensor data, the volumetric data forming a three-dimensional volumetric representation of the object, transmitting, by the communication interface of the digitization apparatus, the volumetric data over a communication network, receiving, by the communication interface of the visualization apparatus, the volumetric data over the communication network, determining, by the processor of the visualization apparatus, the three-dimensional representation of the object based upon the volumetric data, and visualizing, by the display of the visualization apparatus, the three-dimensional representation of the object to the remote user.

The method may be performed by the system. Further features of the method may directly result from the features and/or functionality of the system.

According to a fourth aspect, the invention relates to a computer program comprising a program code for performing the method when executed by the system.

The computer program may be stored on an electronic storage medium.

### BRIEF DESCRIPTION OF THE FIGURES

Further embodiments of the invention are described with respect to the following figures, in which:
- Fig. 1: shows a diagram of a system for visualizing an object to a remote user; and
- Fig. 2: shows a diagram of a method of operating a system for visualizing an object to a remote user.

### DETAILED DESCRIPTION OF THE FIGURES

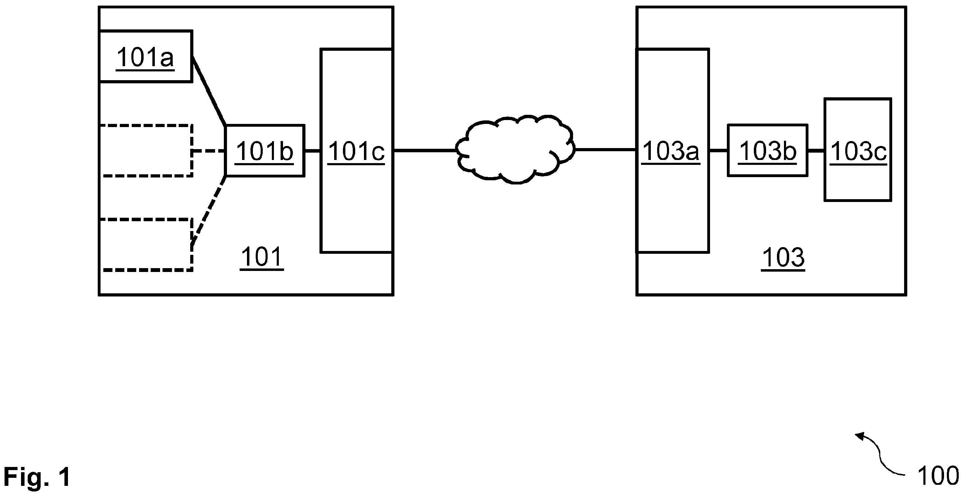

Fig. 1 shows a schematic diagram of a system 100 for visualizing an object to a remote user.

The system 100 comprises a digitization apparatus 101 comprising a sensor 101a, a processor 101b, and a communication interface 101c. The sensor 101a is configured to sense the object within a three-dimensional space region to obtain sensor data, the sensor data representing a location of the object relative to the sensor and a shape of the object relative to the sensor. The processor 101b is configured to determine volumetric data based upon the sensor data, the volumetric data forming a three-dimensional volumetric representation of the object. The volumetric data may e.g. comprise volumetric point cloud data, wherein the volumetric point cloud data represents a plurality of points on the surface of the object. The communication interface 101c is configured to transmit the volumetric data over a communication network.

As indicated in the figure by dashed lines, the digitization apparatus 101 may comprise one or more further sensors, i.e. a plurality of sensors. If the digitization apparatus 101 comprises a plurality of sensors, the processor 101b of the digitization apparatus 101 may be configured to fuse the respective sensor data of the respective sensors of the plurality of sensors. By fusion of the respective sensor data, the quality of the three-dimensional representation of the object may be improved.

A further sensor may e.g. be configured to sense the object within the three-dimensional space region to obtain further sensor data, the further sensor data representing a further location of the object relative to the further sensor and a further shape of the object relative to the further sensor. The processor 101b may be configured to determine the volumetric data further based upon the further sensor data. In this case, additional three-dimensional information associated with the object may be provided by the further sensor. Such further sensor capable of providing additional three-dimensional information associated with the object may e.g. be a depth sensor, a radar sensor, a lidar sensor, a ladar sensor, an ultrasonic sensor, or a stereographic camera.

Additionally, or alternatively, a further sensor may e.g. be configured to sense the object within the three-dimensional space region to obtain further sensor data, the further sensor data representing a texture and/or a color of the object. The processor 101b may be configured to determine the volumetric data further based upon the further sensor data. In this case, additional texture information and/or color information associated with the object may be provided by the further sensor. Such further sensor capable of providing additional texture information and/or color information associated with the object may e.g. be a visible light camera or an infrared light camera.

For communicating the volumetric data over the communication network, any one or a combination of the following communication standards may be applied: a satellite-based communication standard, in particular the Inmarsat BGAN communication standard, the Iridium Certus communication standard, and/or the Globalstar communication standard, and/or a cellular mobile communication standard, in particular the 5G communication standard, the 4G communication standard, the 3G communication standard, and/or the WiMAX communication standard. For an improved communication from onboard a maritime vessel, the communication interface 101c of the digitization apparatus 101 may particularly be connectable to a communication relay onboard the maritime vessel. The connection between the communication interface 101c of the digitization apparatus 101 and the communication relay may e.g. be realized by an Ethernet connection.

The system 100 further comprises a visualization apparatus 103 comprising a communication interface 103a, a processor 103b, and a display 103c. The communication interface 103a is configured to receive the volumetric data over the communication network. The processor 103b is configured to determine the three-dimensional representation of the object based upon the volumetric data. The display 103c is configured to visualize the three-dimensional representation of the object to the remote user. The display 103c may e.g. be part of one of the following devices: virtual reality (VR) glasses or headset, augmented reality (AR) glasses, a computer system, a smartphone, a tablet. The three-dimensional representation of the object may be rotated, panned, and/or zoomed by the remote user on the display 103c.

For determining the three-dimensional representation of the object based upon the volumetric data in a particularly efficient manner, the processor 103b of the visualization apparatus 103 may be configured to perform a three-dimensional rendering based upon the volumetric data, e.g. using a three-dimensional rendering application programming interface, API. Such three-dimensional rendering application programming interface, API, may specifically be designed for visualizing a specific type of object.

Optionally, the processor 103b of the visualization apparatus 103 is configured to determine an object type of the object based upon the three-dimensional representation of the object to obtain an object type indicator, and to retrieve object information associated with the object from a database based upon the object type indicator. The display 103c of the visualization apparatus 103 may be configured visualize the object information to the remote user. The visualization of the object information may be performed as an overlay to the three-dimensional representation of the object. The objection information may e.g. represent blueprints, technical schemas, other graphical information associated with the object.

Since the system 100 is particularly suited for remote assistance in maintenance, repair, and/or troubleshooting, the system 100 may additionally be equipped with audio connection capabilities. In particular, an audio connection from the digitization apparatus 101 to the visualization apparatus 103 and/or a reverse audio connection from the visualization apparatus 103 to the digitization apparatus 101 may be realized.

In case of the audio connection from the digitization apparatus 101 to the visualization apparatus 103, the digitization apparatus 101 may further comprise a microphone being configured to capture an acoustic sound signal, in particular an acoustic sound signal originating from the three-dimensional space region. The processor 101b may be configured to determine sound data based upon the acoustic sound signal. The communication interface 101c may be configured to transmit the sound data over the communication network. The visualization apparatus 103 may further comprise a loudspeaker. The communication interface 103a may be configured to receive the sound data over the communication network. The processor 103b may be configured to determine the acoustic sound signal based upon the sound data. The loudspeaker may be configured to emit the acoustic sound signal towards the remote user. Thereby, the remote user may obtain further information, which may e.g. be provided by another user located at the object.

In case of the reverse audio connection from the visualization apparatus 103 to the digitization apparatus 101, the visualization apparatus 103 may further comprise a microphone being configured to capture a reverse acoustic sound signal, in particular a reverse acoustic sound signal originating from the remote user. The processor 103b may be configured to determine reverse sound data based upon the reverse acoustic sound signal. The communication interface 103a may be configured to transmit the reverse sound data over the communication network. The digitization apparatus 101 may further comprise a loudspeaker. The communication interface 101c may be configured to receive the reverse sound data over the communication network. The processor 101b may be configured to determine the reverse acoustic sound signal based upon the reverse sound data. The loudspeaker may be configured to emit the reverse acoustic sound signal. Thereby, the remote user may provide spoken handling instructions for maintenance, repair, and/or troubleshooting, which may e.g. be executed by another user located at the object.

For operation of the system 100 in real-time, a small latency of the communication link between the communication interface 101c of the digitization apparatus 101 and the communication interface 103a of the visualization apparatus 103 may be desirable. For this purpose, the processor 101b of the digitization apparatus 101 may be configured to determine a latency of the communication link to obtain a latency indicator, and to adapt a quality of the three-dimensional volumetric representation of the object based upon the latency indicator. Thereby, a reduction of the volumetric data to be communicated between the digitization apparatus 101 and the visualization apparatus 103 may be achieved.

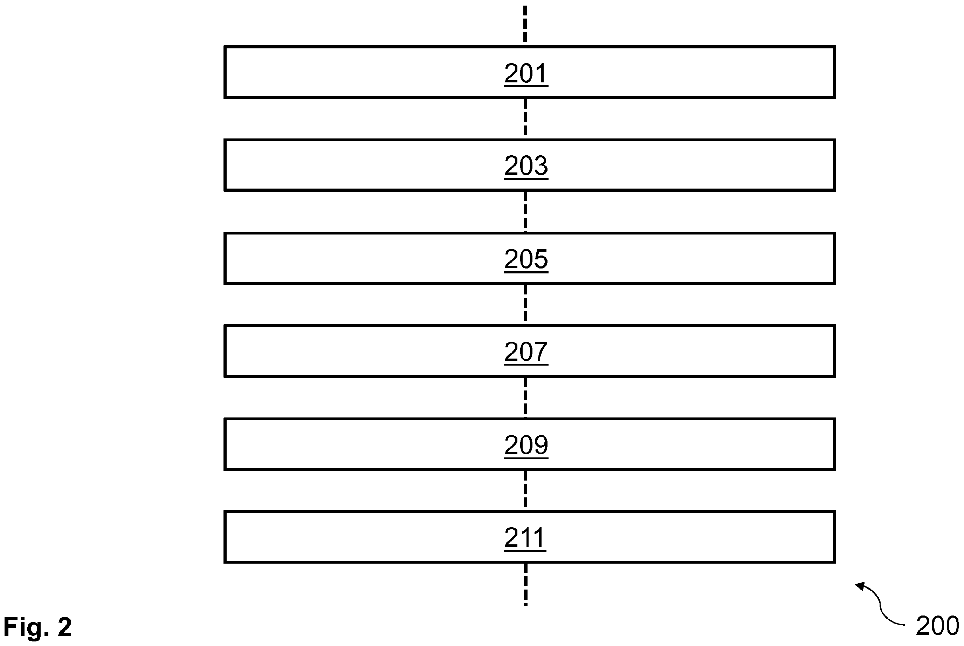

Fig. 2 shows a schematic diagram of a method 200 of operating a system for visualizing an object to a remote user.

The system comprises a digitization apparatus and a visualization apparatus. The digitization apparatus comprises a sensor, a processor, and a communication interface. The visualization apparatus comprises a communication interface, a processor, and a display.

The method 200 comprises sensing 201, by the sensor of the digitization apparatus, the object within a three-dimensional space region to obtain sensor data, the sensor data representing a location of the object relative to the sensor and a shape of the object relative to the sensor, determining 203, by the processor of the digitization apparatus, volumetric data based upon the sensor data, the volumetric data forming a three-dimensional volumetric representation of the object, transmitting 205, by the communication interface of the digitization apparatus, the volumetric data over a communication network, receiving 207, by the communication interface of the visualization apparatus, the volumetric data over the communication network, determining 209, by the processor of the visualization apparatus, the three-dimensional representation of the object based upon the volumetric data, and visualizing 211, by the display of the visualization apparatus, the three-dimensional representation of the object to the remote user.

In summary, the concept allows for an efficient visualization of the object to the remote user, in particular for remote assistance in maintenance, repair, and/or troubleshooting onboard a maritime vessel. In addition, the concept may allow for providing medical assistance onboard a maritime vessel. Various further aspects of the concept are summarized in the following:

The concept may allow for a digitalization and visualization of an object within a three-dimensional space region in real-time. The digitization may be performed by accurate local measurements of the object using specific sensors, such as a depth sensor, a visual light camera and/or an infrared light camera. By using specific computer vision algorithms, a three-dimensional representation of the object may be determined. In particular, respective sensor data from a plurality of sensors may be fused considering different perspectives of the respective sensors. The volumetric data may then represent only a low amount of geometry, color and/or other measures.

The volumetric data may comprise volumetric point cloud data. Such volumetric point cloud data may represent three-dimensional information, potentially with a custom multi-sample, multi-dimensional representation of the measures of the respective sensors. Specific internal data structures may be used based on multiple numeric data measures for each point. The volumetric point cloud data may specifically be suited to be used for rendering.

For visualizing the three-dimensional representation of the object to the user, a display as part of virtual reality (VR) glasses or headset, augmented reality (AR) glasses, a computer system, such as a notebook or laptop, a smartphone, or a tablet, may be used. In this regard, VR/AR engines and/or a three-dimensional rendering application programming interface, API, may be used. Optionally, object information may additionally be overlaid to the three-dimensional representation of the object, e.g. including specific graphical elements, such as blueprints, technical schemas, or other graphical data. The display may particularly visualize the three-dimensional representation of the object along with other graphical elements and video/audio streams at the same time within a virtual space, e.g. being overlapped to the physical world. Thereby, a stereographic visualization of synthetic imagery generated in real-time may be provided; seamlessly blending the three-dimensional information with the physical world.

In particular when using virtual reality (VR) glasses or headset, or augmented reality (AR) glasses , two slightly different sets of images, wherein the perspective may be adapted for each eye, may be used for projecting the three-dimensional representation into a two-dimensional frame, e.g. at 60 Hz to 120 Hz. 240 Hz is also possible and reduces frame tearing in real-time rendering with fast moving field of views (such as when the user quickly rotates the head). Thereby, an interactive visualization according to the head point of view of the remote user may be achieved in three-dimensional space.

Furthermore, communication between a local user at the object and the remote user may be supported using a streaming of audio signals. For this purpose, microphones and loudspeakers, e.g. headphones, potentially as part of VR/AR headset or glasses, may be used. This may further allow to enhance the remote assistance capability. In addition, a streaming of video signals may be employed by the system.

For communication between the digitization apparatus and the visualization apparatus, one or a combination of different communication standards may be used, in particular a satellite-based communication standard and/or a cellular mobile communication standard. For satellite-based communication, a very small aperture terminal, VSAT, may be employed. In particular, communications over multiple network infrastructures may be used, wherein the amount of data may be adapted according to available communication resources.

The communications may e.g. be performed between (a) different rooms onboard a maritime vessel, (b) from the maritime vessel to land based headquarters or other supporting land based locations, or (c) from the maritime vessel to another maritime vessel, in ports, along the coast, or in open seas. Thereby, available on-board connections onboard the maritime may be leveraged. Furthermore, network communication application programming interfaces, APIs, may be used. The digitization apparatus may particularly be interfaced to a communication relay onboard the maritime vessel over a ship internal network e.g. using cables or WiFi.

The digitization apparatus may be configured to sense the object within the three-dimensional space region, e.g. within a room, using the different sensors, such as depth sensors, visual light cameras, infrared light cameras. Specific computer vision algorithms may be applied. The three-dimensional representation of the object may be rendered in real-time using the three-dimensional rendering API. The different sensors may be connected to the processor of the digitization apparatus over wireline or wireless connections, such as USB-C, Thunderbolt 3, WiFi, or Bluetooth. For this purpose, specific network communication application programming interfaces, APIs, may be used.

In general, the concept provides the flexibility to arrange the sensors as required, or to permanently install the sensors at specific locations. Furthermore, the concept provides the flexibility to support virtual reality (VR) glasses or headset, or augmented reality (AR) glasses, available from different manufacturers. Also, the concept supports the use of a smartphone or a tablet providing three-dimensional rendering capabilities, potentially in conjunction with high-resolution cameras.

Possibly, the use of virtual reality (VR) glasses or headset, augmented reality (AR) glasses, a smartphone or a tablet may be the main and/or a supporting means of communication between the user onboard the maritime vessel and the remote user assisting remotely, which may allow one or multiple users with the relevant expertise to collaborate from different remote locations.

The visualization apparatus may also highlight and provide support in identifying elements that need to be inspected or repaired by the remote user. In this regard, graphical step-by-step handling instructions may be displayed e.g. on how to repair a malfunctioning component of a technical system. In particular, different types of graphical elements including overlays of machine schematics, vessel schematics, or any other kind of schematic to support the remote user may be visualized. Furthermore, external web pages, e.g. floating in front of the remote user, may be visualized to the remote user. In this regard, specific web browsers for virtual reality (VR), operating systems, OSs, may be used.

Parts of the system, in particular the digitization apparatus and/or the visualization apparatus, may each be bundled as a kit comprising the respective components for easy deployment. The kit may, however, also be customized. An exemplary kit may e.g. comprise VR/AR glasses or headset, a plurality of sensors including a depth sensor, an infrared light camera, a visible light camera along with multiple stands, suitable cables, and a suitcase. For further ease of implementation, a common shared code base with a number of custom parts tied to specific classes of devices may be used. Thus, a suite of compatible applications may be provided running on VR/AR glasses or headset, a computer system, a smartphone, and/or a tablet.

The concept particularly allows for remote assistance in any given circumstances, but it is of particular importance for high risk or emergency situations using real-time remote visualization of the object within the three-dimensional space region and allows remotely for professionals or experts to provide assistance without having to be physically present. Furthermore, handling instructions may be communicated to onsite or onboard staff on how to solve the issues. Moreover, real-time responses from different experts may be made available remotely. Thereby, tele-presence of the remote user may be supported, and a non-skilled user onboard the maritime vessel may be assisted.

### REFERENCE SIGNS

- 100: System
- 101: Digitization apparatus
- 101a: Sensor
- 101b: Processor
- 101c: Communication interface
- 103: Visualization apparatus
- 103a: Communication interface
- 103b: Processor
- 103c: Display

- 200: Method
- 201: Sensing
- 203: Determining
- 205: Transmitting
- 207: Receiving
- 209: Determining
- 211: Visualizing

## Claims

1. A system (100) for visualizing an object to a remote user, the system (100) comprising:
a digitization apparatus (101) comprising a sensor (101a), a processor (101b), and a communication interface (101c), wherein the sensor (101a) is configured to sense the object within a three-dimensional space region to obtain sensor data, the sensor data representing a location of the object relative to the sensor (101a) and a shape of the object relative to the sensor (101a), wherein the processor (101b) is configured to determine volumetric data based upon the sensor data, the volumetric data forming a three-dimensional volumetric representation of the object, and wherein the communication interface (101c) is configured to transmit the volumetric data over a communication network; and
a visualization apparatus (103) comprising a communication interface (103a), a processor (103b), and a display (103c), wherein the communication interface (103a) is configured to receive the volumetric data over the communication network, wherein the processor (103b) is configured to determine the three-dimensional representation of the object based upon the volumetric data, and wherein the display (103c) is configured to visualize the three-dimensional representation of the object to the remote user.

2. The system (100) of claim 1, wherein the digitization apparatus (101) comprises a plurality of sensors comprising the sensor (101a) and a further sensor, wherein the further sensor is configured to sense the object within the three-dimensional space region to obtain further sensor data, the further sensor data representing a further location of the object relative to the further sensor and a further shape of the object relative to the further sensor, and wherein the processor (101b) is configured to determine the volumetric data further based upon the further sensor data.

3. The system (100) of claim 2, wherein the processor (101b) of the digitization apparatus (101) is configured to fuse the respective sensor data of the respective sensors of the plurality of sensors.

4. The system (100) of any one of the preceding claims, wherein the sensor (101a) and/or the further sensor of the digitization apparatus (101) is one of the following sensors: a depth sensor, a radar sensor, a lidar sensor, a ladar sensor, an ultrasonic sensor, a stereographic camera.

5. The system (100) of any one of the preceding claims, wherein the volumetric data comprises volumetric point cloud data, wherein the volumetric point cloud data represents a plurality of points on the surface of the object.

6. The system (100) of any one of the preceding claims, wherein the communication interface (101c) of the digitization apparatus (101) and the communication interface (103a) of the visualization apparatus (103) are configured to establish a communication link for communicating the volumetric data, and wherein the processor (101b) of the digitization apparatus (101) is configured to determine a latency of the communication link to obtain a latency indicator, and to adapt a quality of the three-dimensional volumetric representation of the object based upon the latency indicator.

7. The system (100) of any one of the preceding claims, wherein the processor (103b) of the visualization apparatus (103) is configured to perform a three-dimensional rendering based upon the volumetric data.

8. The system (100) of any one of the preceding claims, wherein the display (103c) is part of one of the following devices: virtual reality (VR) glasses or headset, augmented reality (AR) glasses, a computer system, a smartphone, a tablet.

9. The system (100) of any one of the preceding claims,
wherein the digitization apparatus (101) further comprises a microphone being configured to capture an acoustic sound signal, in particular an acoustic sound signal originating from the three-dimensional space region, wherein the processor (101b) is configured to determine sound data based upon the acoustic sound signal, and wherein the communication interface (101c) is configured to transmit the sound data over the communication network;
wherein the visualization apparatus (103) further comprises a loudspeaker, wherein the communication interface (103a) is configured to receive the sound data over the communication network, wherein the processor (103b) is configured to determine the acoustic sound signal based upon the sound data, and wherein the loudspeaker is configured to emit the acoustic sound signal towards the remote user.

10. The system (100) of any one of the preceding claims,
wherein the visualization apparatus (103) further comprises a microphone being configured to capture a reverse acoustic sound signal, in particular a reverse acoustic sound signal originating from the remote user, wherein the processor (103b) is configured to determine reverse sound data based upon the reverse acoustic sound signal, wherein the communication interface (103a) is configured to transmit the reverse sound data over the communication network;
wherein the digitization apparatus (101) further comprises a loudspeaker, wherein the communication interface (101c) is configured to receive the reverse sound data over the communication network, wherein the processor (101b) is configured to determine the reverse acoustic sound signal based upon the reverse sound data, and wherein the loudspeaker is configured to emit the reverse acoustic sound signal.

11. The system (100) of any one of the preceding claims, wherein the processor (103b) of the visualization apparatus (103) is configured to determine an object type of the object based upon the three-dimensional representation of the object to obtain an object type indicator, and to retrieve object information associated with the object from a database based upon the object type indicator, and wherein the display (103c) of the visualization apparatus (103) is configured visualize the object information to the remote user.

12. The system (100) of any one of the preceding claims, wherein the communication interface (101c) of the digitization apparatus (101) and the communication interface (103a) of the visualization apparatus (103) are configured to communicate over the communication network according to any one or a combination of the following communication standards: a satellite based communication standard, in particular the Inmarsat BGAN communication standard, the Iridium Certus communication standard, or the Globalstar communication standard, a cellular mobile communication standard, in particular the 5G communication standard, the 4G communication standard, the 3G communication standard, or the WiMAX communication standard.

13. Use of the system (100) of any one of the preceding claims for remote assistance in maintenance, repair, or troubleshooting onboard a maritime vessel.

14. A method (200) of operating a system (100) for visualizing an object to a remote user, the system (100) comprising a digitization apparatus (101) and a visualization apparatus (103), the digitization apparatus (101) comprising a sensor (101a), a processor (101b), and a communication interface (101c), the visualization apparatus (103) comprising a communication interface (103a), a processor (103b), and a display (103c), the method (200) comprising:
sensing (201), by the sensor (101a) of the digitization apparatus (101), the object within a three-dimensional space region to obtain sensor data, the sensor data representing a location of the object relative to the sensor (101a) and a shape of the object relative to the sensor (101a);
determining (203), by the processor (101b) of the digitization apparatus (101), volumetric data based upon the sensor data, the volumetric data forming a three-dimensional volumetric representation of the object;
transmitting (205), by the communication interface (101c) of the digitization apparatus (101), the volumetric data over a communication network;
receiving (207), by the communication interface (103a) of the visualization apparatus (103), the volumetric data over the communication network;
determining (209), by the processor (103b) of the visualization apparatus (103), the three-dimensional representation of the object based upon the volumetric data; and
visualizing (211), by the display (103c) of the visualization apparatus (103), the three-dimensional representation of the object to the remote user.

15. A computer program comprising a program code for performing the method (200) of claim 14 when executed by the system (100) of any one of claims 1 to 12.
